(19) Europäisches Patentamt

European Patent Office

Office européen des brevets

(11) **EP 4 450 882 B1**

(12) **EUROPEAN PATENT SPECIFICATION**

(45) Date of publication and mention
of the grant of the patent:
**31.12.2025 Bulletin 2026/01**

(21) Application number: **22907005.7**

(22) Date of filing: **19.10.2022**

(51) International Patent Classification (IPC):
*F24F 7/007* (2006.01)       *F24F 7/08* (2006.01)
*F24F 11/50* (2018.01)       *F24F 11/65* (2018.01)
*F24F 11/74* (2018.01)       *F24F 110/70* (2018.01)
*F24F 120/10* (2018.01)

(52) Cooperative Patent Classification (CPC):
**F24F 11/65; F24F 7/007; F24F 7/08; F24F 11/30;
F24F 11/46; F24F 11/50; F24F 11/74; F24F 11/77;
F24F 12/001; F24F 12/006;** F24F 2110/12;
F24F 2110/70; F24F 2120/10; Y02B 30/70

(86) International application number:
**PCT/JP2022/038884**

(87) International publication number:
**WO 2023/112470 (22.06.2023 Gazette 2023/25)**

(54) **VENTILATION SYSTEM**

LÜFTUNGSSYSTEM

SYSTÈME DE VENTILATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.12.2021 JP 2021204795**

(43) Date of publication of application:
**23.10.2024 Bulletin 2024/43**

(73) Proprietor: **DAIKIN INDUSTRIES, LTD.**
**Osaka-shi, Osaka 530-0001 (JP)**

(72) Inventors:
• **MIYAZAKI, Takeru**
**Osaka-shi, Osaka 530-8323 (JP)**
• **YAMANOI, Yoshiki**
**Osaka-shi, Osaka 530-8323 (JP)**
• **IYOSHI, Yuta**
**Osaka-shi, Osaka 530-8323 (JP)**
• **SAEKI, Kumiko**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
CN-A- 112 944 560       JP-A- 2000 088 320
JP-A- 2002 162 067       JP-A- 2006 098 007
JP-A- 2008 122 062       JP-A- 2014 134 343
JP-A- 2019 168 194       JP-A- 2021 177 111
KR-B1- 102 249 491       KR-B1- 102 249 491
KR-B1- 102 259 152       US-A- 5 119 987
US-A1- 2021 108 805

## Description

### TECHNICAL FIELD

The present invention relates to a ventilation system.

### BACKGROUND ART

Patent Literature 1 discloses a ventilation system capable of first type ventilation. This ventilation system includes a heat exchanger, a supply air path and exhaust air path that allow the inside and outside of a target space to communicate with each other via the heat exchanger, an air supply fan that supplies air outside the target space to the target space via the supply air path, and an exhaust fan that exhausts air in the target space to the outside of the target space via the exhaust air path. KR102249491 B1 discloses a ventilation system according to the preamble of claim 1.

In the above ventilation system, the heat exchanger of the heat pump heat exchanger recovers heat from the return air in the indoor zone and then exhausts the heat to the outdoors, and uses the recovered heat for heat exchange with outside air from outdoors to supply the air to the indoor zone.

### CITATION LIST

[PATENT LITERATURE]

PATENT LITERATURE 1: Japanese Laid-Open Patent Publication No. 3-20573

### SUMMARY OF THE INVENTION

[TECHNICAL PROBLEM]

Conventional ventilation systems focus exclusively on heat recovery from the return air, and therefore are not designed to diversify control modes, such as prioritizing ventilation function in some situations and temperature adjustment function in other situations.

An object of the present invention is to diversify control modes related to ventilation function and temperature adjustment function in a ventilation system capable of recovering heat from return air.

[SOLUTION TO PROBLEM]

(1) A ventilation system according to the present invention includes: a refrigerant circuit that circulates refrigerant through a compressor, a first heat exchanger, and a second heat exchanger; an air supply fan that draws outdoor air into an indoor space through the first heat exchanger; an exhaust fan that exhausts indoor air to an outdoor space through the second heat exchanger; a temperature sensor for detecting a blow-out temperature of the air supply fan; a monitoring sensor for detecting state information that is at least one of an indoor air state, presence or absence of people indoors, and number of people indoors; and a control unit that adjusts indoor ventilation rate. Types of control modes performed by the control unit (CU) include a first mode and a second mode described below.

First mode: A control mode having higher weighting on the state information, among the state information and the blow-out temperature that are usable for adjusting the indoor ventilation rate.

Second mode: A control mode having higher weighting on the blow-out temperature, among the state information and the blow-out temperature that are usable for adjusting the indoor ventilation rate.

Since the ventilation system according to the present invention includes the above-described first mode and second mode as the types of the control modes performed by the control unit, it is possible to diversify the control modes related to ventilation function and temperature adjustment function in the ventilation system capable of recovering heat from return air.

(2) The ventilation system according to the present invention may further include an input equipment including type information of the control modes as setting information that can be input by a user.

In this case, the ventilation system includes the input equipment including the control mode type information as the setting information that can be input by the user, thereby allowing the user to set the ventilation system to operate in either the first mode or the second mode.

(3) In the ventilation system according to the present invention, the input equipment may be capable of limiting the user who inputs the type information of the control modes.

In this case, since the user who inputs the type information of the control modes can be limited to, for example, a building manager, it is possible to prevent the occupants of a room, which is the target space of the ventilation system, from arbitrarily changing the control modes.

(4) In the ventilation system according to the present invention, the control unit may execute the first mode regardless of the control mode type information input to the input equipment, if a detection result of the monitoring sensor exceeds a predetermined threshold value.

In this case, it is possible to more quickly improve a deteriorated indoor environment (for example, $CO_2$ concentration exceeding the reference amount) as compared with the case where temperature adjustment priority or balance control is continued.

(5) In the ventilation system according to the present invention, the control unit may be further capable of executing a third mode for determining whether to decrease, maintain, or increase the current ventilation rate on the basis of at least a detection result of the temperature sensor, a set value of the blow-out temperature, the detection result of the monitoring sensor, and a set value of the state information.

In the ventilation system according to the present invention, the control unit is capable of executing the third mode for determining whether to decrease, maintain, or increase the current ventilation rate on the basis of at least the above four parameters. Thus, it is possible to perform flexible operation in which ventilation function and temperature adjustment function are moderately balanced.

## BRIEF DESCRIPTION OF DRAWINGS

FIG. 1 is a longitudinal sectional view of a building illustrating an example of the overall configuration of a ventilation system.
FIG. 2 is a block diagram illustrating an example of the control system of a control unit.
FIG. 3 is a flowchart illustrating an example of information processing of a main controller.
FIG. 4 is a reference table when control mode type information is ventilation priority.
FIG. 5 is a reference table when the control mode type information is temperature adjustment priority.
FIG. 6 is a reference table when the control mode type information is balance control.
FIG. 7 is a flowchart illustrating an example of information processing of air supply and exhaust controllers.

## DETAILED DESCRIPTION

[Overall Configuration of Ventilation System]

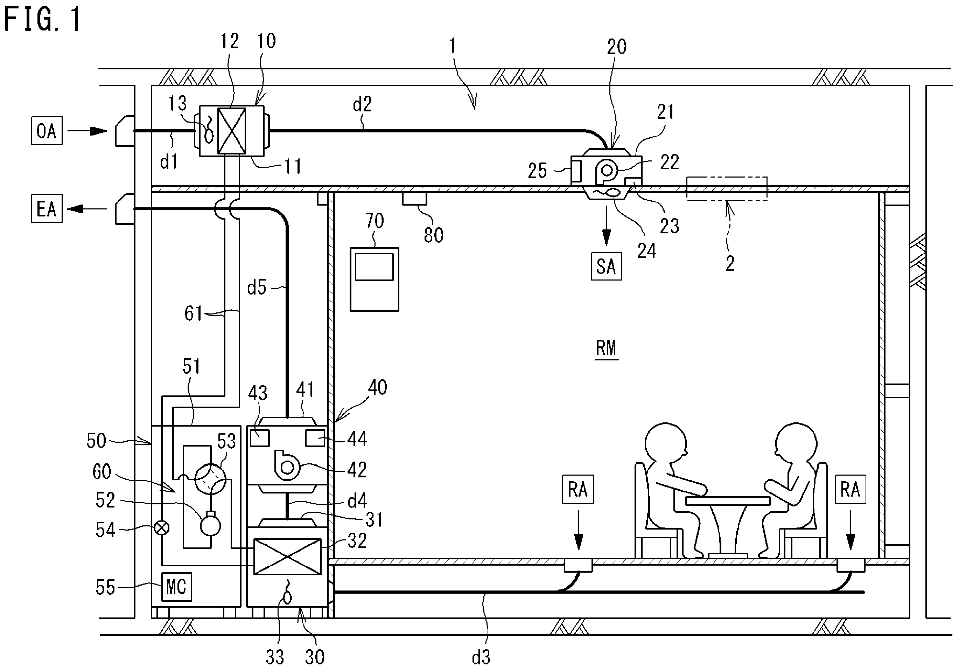

FIG. 1 is a longitudinal sectional view of a building illustrating an example of the overall configuration of a ventilation system 1.

In FIG. 1, reference signs "OA", "SA", "RA", and "EA" have the following meanings.

OA: Outdoor air (outside air). This is also the air that the system 1 draws in from outdoors.
SA: Air (supply air) that the system 1 sends indoors.
RA: Indoor air (return air). This is also the air that the system 1 draws in from indoors.
EA: Air (exhaust air) that the system 1 discharges outdoors.

The ventilation system 1 according to the present embodiment provides first-type ventilation for an indoor target space RM while performing temperature adjustment for the supply air SA and heat recovery from the return air RA. The target space RM is, for example, the indoor space of various buildings such as an office building, a hospital, and a factory.

The target space RM is preferably an airtight room for a predetermined use, but may be, for example, an indoor corridor, a staircase, an entrance, or the like. Furthermore, in the target space RM, an indoor unit 2 of an air conditioning system separate from the ventilation system 1 may be installed.

As illustrated in FIG. 1, the ventilation system 1 includes a heat exchange unit 10 on the utilization side (air supply side), an air supply unit 20, a heat exchange unit 30 on the recovery side (exhaust side), an exhaust unit 40, a compressor unit 50, and a refrigerant circuit 60.

The heat exchange unit 10 and the air supply unit 20 are installed in the ceiling space of the target space RM, and the heat exchange unit 30, the exhaust unit 40, and the compressor unit 50 are installed inside the wall of the target space RM.

The ventilation system 1 further includes an input device 70 that is an input equipment allowing users to input operations, and a monitoring sensor 80. The input device 70 is, for example, a remote controller attached to the wall surface of the target space RM. The input device 70 may be installed in a room different from the target space RM, such as a management room (not illustrated).

The monitoring sensor 80 monitors an indoor air state, and is capable of wired or wireless communication conforming to a predetermined communication standard. In the present embodiment, the monitoring sensor 80 is assumed to be a $CO_2$ sensor that is attached to the ceiling surface of the target space RM and that detects $CO_2$ concentration.

The installation position of each unit illustrated in FIG. 1 is an example, and for example, the heat exchange unit 30 and the exhaust unit 40 may be arranged in the ceiling space, and the return air RA may be drawn in from the ceiling side.

Alternatively, at least one of the heat exchange unit 30, the exhaust unit 40, and the compressor unit 50 may be installed outdoors.

[Components of Each Unit]

The heat exchange unit 10 on the utilization side has a casing 11 and a plurality of devices housed in the casing 11. The plurality of devices includes a utilization-side heat exchanger (hereinafter referred to as "first heat exchanger") 12, which is an element device of the refrigerant circuit 60, and an outside air temperature sensor 13.

The first heat exchanger 12 is, for example, a cross-fin tube or microchannel heat exchanger, and exchanges heat between the refrigerant flowing inside the first heat exchanger 12 and the outside air OA.

The air supply unit 20 has a casing 21 and a plurality of devices housed in the casing 21. The plurality of devices includes an air supply fan 22, an air supply detector 23, a supply air temperature sensor 24, and an air supply controller 25.

The air supply fan 22 is, for example, a centrifugal fan with controllable fan speed. The air supply detector 23 is, for example, an airflow sensor for detecting airflow, or a sensor for detecting air velocity, differential pressure, fan speed, or the like (hereinafter referred to as "airflow equivalent"), which are physical quantities from which the airflow is calculated. Therefore, if the air supply controller 25 has the function of counting the fan speed, the air supply controller 25 also serves as the air supply detector 23.

The air supply controller 25 is, for example, a control module including a circuit board and an integrated circuit such as a central processing unit (CPU) and memory mounted on the circuit board. The integrated circuit may include at least a field-programmable gate array (FPGA) or an application-specific IC (ASIC).

The air supply controller 25 is capable of performing communication control with other controllers and sensors conforming to a predetermined communication standard and of performing predetermined information processing such as control for adjusting the fan speed so that the airflow of the air supply fan 22 becomes a target value.

The heat exchange unit 30 on the recovery side has a casing 31 and a plurality of devices housed in the casing 31. The plurality of devices includes a recovery-side heat exchanger (hereinafter referred to as "second heat exchanger") 32, which is an element device of the refrigerant circuit 60, and a return air temperature sensor 33.

The second heat exchanger 32 is, for example, a cross-fin tube or microchannel heat exchanger, and exchanges heat between the refrigerant flowing inside the second heat exchanger 32 and the return air RA.

The exhaust unit 40 has a casing 41 and a plurality of devices housed in the casing 41. The plurality of devices includes an exhaust fan 42, an exhaust detector 43, and an exhaust controller 44.

The exhaust fan 42 is, for example, a centrifugal fan with controllable fan speed. The exhaust detector 43 is, for example, an airflow sensor for detecting airflow or a sensor for detecting the airflow equivalent. Therefore, if the exhaust controller 44 has the function of counting the fan speed, the exhaust controller 44 also serves as the exhaust detector 43.

The exhaust controller 44 is, for example, a control module including a circuit board and an integrated circuit such as a CPU and memory mounted on the circuit board. The integrated circuit may include at least the FPGA or the ASIC.

The exhaust controller 44 is capable of performing communication control with other controllers and sensors conforming to a predetermined communication standard and of performing predetermined information processing such as control for adjusting the fan speed so that the airflow of the exhaust fan 42 becomes a target value.

The compressor unit 50 includes a casing 51 and a plurality of devices housed in the casing 51. The plurality of devices includes a compressor 52, a four-way valve 53, an expansion valve 54, and a main controller 55.

The refrigerant circuit 60 circulates refrigerant through the compressor 52, the first heat exchanger 12, and the second heat exchanger 32, and has the compressor 52, the four-way valve 53, the expansion valve 54, the first heat exchanger 12, the second heat exchanger 32, and a refrigerant pipe 61 that connects these components.

The main controller 55 is, for example, a control module including a circuit board and an integrated circuit such as a CPU and memory mounted on the circuit board. The integrated circuit may include at least the FPGA or the ASIC.

The main controller 55 is capable of performing communication control with other controllers and sensors conforming to a predetermined communication standard and of performing predetermined information processing such as determination of a controlled variable for the refrigerant circuit 60 according to the ventilation rate.

[Supply Air Path and Exhaust Air Path of Ventilation System]

In the ceiling space of the target space RM, the suction port of the casing 11 communicates with an air supply port outdoors through a duct d1.

In the ceiling space of the target space RM, the suction port of the casing 21 is airtightly connected to the blow-out port of the casing 11 by a duct d2. The blow-out port of the casing 21 is exposed from the ceiling surface to the target space RM.

Therefore, the air path formed by the duct d1, the casing 11, the duct d2, and the casing 21 connects the outdoors to the indoors, and constitutes an "air supply path" in which the first heat exchanger 12 and the air supply fan 22 are disposed.

Note that a blow-out unit (not illustrated) having a filter, a wind direction plate, and the like may be coupled to the blow-out side of the casing 21 via a duct or directly, and the blowing unit may be exposed from the ceiling surface to the target space RM. In addition, a humidifying unit or a filter unit (not illustrated) that collects microparticles (such as PM 2.5) may be provided at points on the ducts d1 and d2. In this case, the casing of each of the above units may also be a component of the air supply path.

Under the floor of the target space RM, the suction port of the casing 31 is airtightly connected to the air supply port in the floor surface by a duct d3 including a branch pipe.

Inside the wall of the target space RM, the suction port of the casing 41 is airtightly connected to the blow-out port of the casing 31 by a duct d4. The blow-out port of the casing 41 communicates with an exhaust port outdoors through a duct d5.

Therefore, the air path formed by the duct d3, the casing 31, the duct d4, the casing 41, and the duct d5 connects the outdoors to the indoors, and constitutes an "exhaust air path" in which the second heat exchanger 32 and the exhaust fan 42 are disposed.

When the air supply fan 22 is driven, the duct d1, the casing 11, and the duct d2 in the air supply path become negative pressure, and the outside air OA is drawn into the duct d1.

At this time, the outside air temperature sensor 13 detects the temperature of the outside air OA before heat exchange with the first heat exchanger 12. The air after heat exchange with the first heat exchanger 12 passes through the duct d2 and the casing 21 and is delivered indoors as the supply air SA. At this time, the supply air temperature sensor 24 detects the temperature of the supply air SA.

When the exhaust fan 42 is driven, the duct d4, the casing 31, and the duct d3 in the exhaust air path become negative pressure, and the return air RA is drawn into the duct d3.

At this time, the return air temperature sensor 33 detects the temperature of the return air RA before heat exchange with the second heat exchanger 32. The air after the heat exchange with the second heat exchanger 32 passes through the casing 41 and the duct d5 and is delivered outdoors as the exhaust air EA.

In the ventilation system 1 in FIG. 1, the supply air path may be configured such that the heat exchange unit 10 is located on the blow-out side (downstream side in the air supply direction) of the air supply unit 20. Similarly, the exhaust air path may be configured such that the heat exchange unit 30 is located on the blow-out side (downstream side in the exhaust direction) of the exhaust unit 40.

In the ventilation system 1 in FIG. 1, the heat exchange unit 10 and the air supply unit 20 may be an integrated unit housed in the same casing. Similarly, the heat exchange unit 30 and the exhaust unit 40 may be an integrated unit housed in the same casing.

[Element Device of Refrigerant Circuit and Temperature Adjustment Operation]

The compressor 52 is an element device of the refrigerant circuit 60, sucking in low-pressure gaseous refrigerant and discharging high-pressure gaseous refrigerant.

The compressor 52 is, for example, a variable displacement type (variable capacity type), the displacement of which is variable by the inverter control of an electric motor. However, the compressor 52 may be of a constant-displacement type or two or more compressors 52 may be connected in parallel.

The expansion valve 54 is, for example, an electric valve for adjusting the flow rate and pressure of the refrigerant in the pipe 61. The refrigerant pressure to the first heat exchanger 12 is adjusted by controlling the opening degree of the expansion valve 54.

The four-way valve 53 reverses the flow direction of the refrigerant in the circuit, and switches the refrigerant discharged from compressor 52 to either first heat exchanger 12 or second heat exchanger 32. Therefore, the temperature adjustment operation that can be executed by the ventilation system 1 includes "cold air supply" (cooling) in which the outside air OA is cooled and supplied indoors, and "warm air supply" (heating) in which the outside air OA is heated and supplied indoors.

Specifically, in the case of cold air supply in which cold air obtained by cooling the outside air OA is used as the supply air SA, the four-way valve 53 is maintained in the state indicated by the solid line in FIG. 1.

In this case, the first heat exchanger 12 on the utilization side functions as an evaporator and cools the outside air OA, and the second heat exchanger 32 on the recovery side functions as a condenser and heats the return air RA. The heating of the return air RA corresponds to heat recovery from the return air RA.

Meanwhile, in the case of the warm air supply in which warm air obtained by heating the outside air OA is used as the supply air SA, the four-way valve 53 is maintained in the state indicated by the broken line in FIG. 1.

In this case, the first heat exchanger 12 on the utilization side functions as a condenser and heats the outside air OA, and the second heat exchanger 32 on the recovery side functions as an evaporator and cools the return air RA. The cooling of the return air RA corresponds to heat recovery from the return air RA.

In the ventilation system 1 according to the present embodiment, the four-way valve 53 of the refrigerant circuit 60 may be omitted. In this case, the first heat exchanger 12 is used only as either an evaporator or a condenser, resulting in the ventilation system 1 that performs only the cold air supply or the warm air supply.

[Control System of Ventilation System]

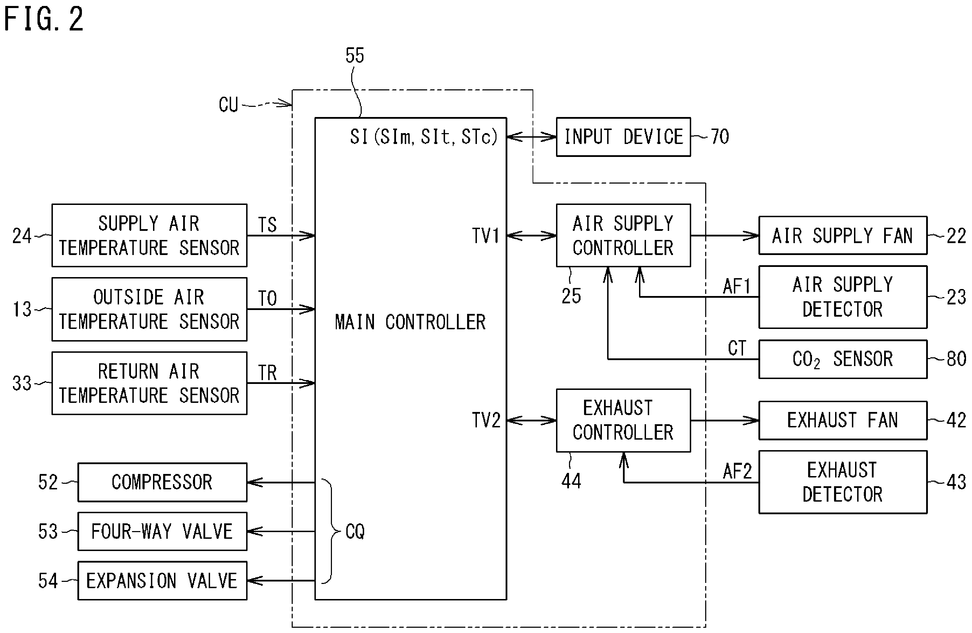

FIG. 2 is a block diagram illustrating an example of the control system of the ventilation system 1.

The meanings of the parameters included in FIG. 2 are as follows.

SI: Setting information that can be input to the input device 70. SI includes the following SIm, SIt, and SIc.

SIm: Control mode type information (such as ventilation priority, temperature adjustment priority, and balance control)

SIt: Set temperature of the supply air SA (set value of blow-out temperature)

SIc: Ventilation rate type information defined in stages (such as "breeze", "weak wind", "medium wind", and "strong wind", or identification numbers from "level 1" to "level 4")

Note that in the present embodiment, there are four types of ventilation rate: breeze, weak wind, medium wind, and strong wind, which correspond to the ratio (%) to the rated airflow ($m^3/h$) of the air supply fan 22.

Furthermore, the memory of the main controller 55 holds a reference table that defines the correspondence relationship between the type of ventilation rate (%) and the target value TV1 of supply airflow ($m^3/h$), to perform control to equally balance the supply airflow ($m^3/h$) and the exhaust airflow ($m^3/h$).

TS: Detection result of the supply air temperature sensor 24 (blow-out temperature of the air supply fan: supply air temperature)

TO: Detection result of the outside air temperature sensor 13 (outside air temperature)

TR: Detection result of the return air temperature sensor 33 (return air temperature)

AF1: Airflow (supply airflow) blown out by the air supply fan 22

However, if the air supply detector 23 is an airflow sensor, AF1 is the detection result of the sensor, and if the air supply detector 23 is a sensor that detects an airflow equivalent, AF1 is the airflow calculated from the detection result of the sensor. AF1 may be the airflow calculated from the fan speed counted by the air supply controller 25.

AF2: Airflow (exhaust airflow) blown out by the exhaust fan 42

However, if the exhaust detector 43 is an airflow sensor, AF2 is the detection result of the sensor, and if the exhaust detector 43 is a sensor that detects an airflow equivalent, AF2 is the airflow calculated from the detection result of the sensor. AF2 may be the airflow calculated from the fan speed counted by the exhaust controller 44.

CT: Detection result of the CO2 sensor 80 (CO2 concentration in the target space RM)

TV1: Target value of airflow (supply airflow) blown out by the air supply fan 22

TV2: Target value of airflow (exhaust airflow) blown out by the exhaust fan 42

CQ: Controlled variable (compressor discharge amount, refrigerant flow rate or direction, and the like) for the refrigerant circuit 60

The mode names (ventilation priority, temperature adjustment priority, and balance control) of the SIm described above are just examples, and can be any mode name that can substantially identify the following control contents.

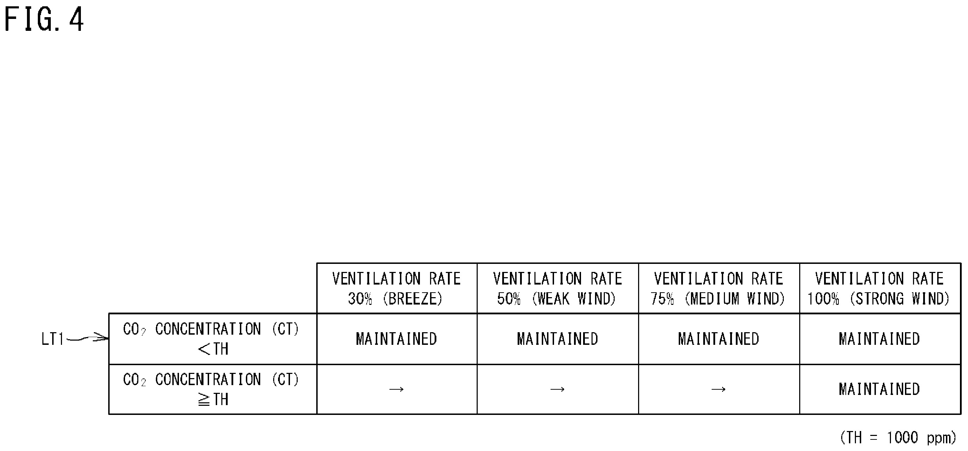

First mode: A control mode having higher weighting on the state information CT, among the state information CT and the blow-out temperature TS that are usable for adjusting the indoor ventilation rate. For example, "ventilation priority" based only on CT, using the reference table in FIG. 4 described later, is a type of the first mode.

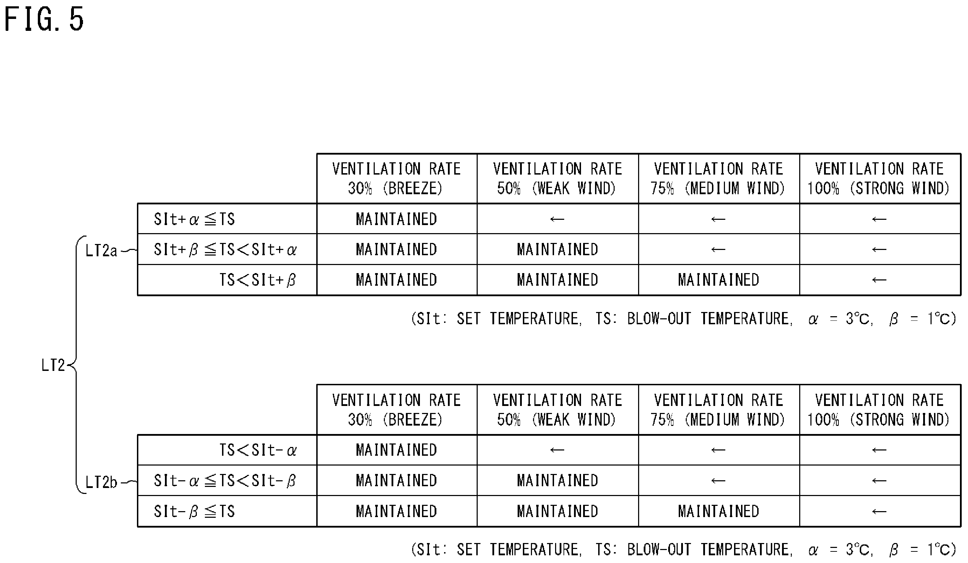

Second mode: A control mode having higher weighting on the blow-out temperature TS, among the state information CT and the blow-out temperature TS that are usable for adjusting the indoor ventilation rate. For example, "temperature adjustment priority" based only on TS, using the reference table in FIG. 5 described later, is a type of the second mode.

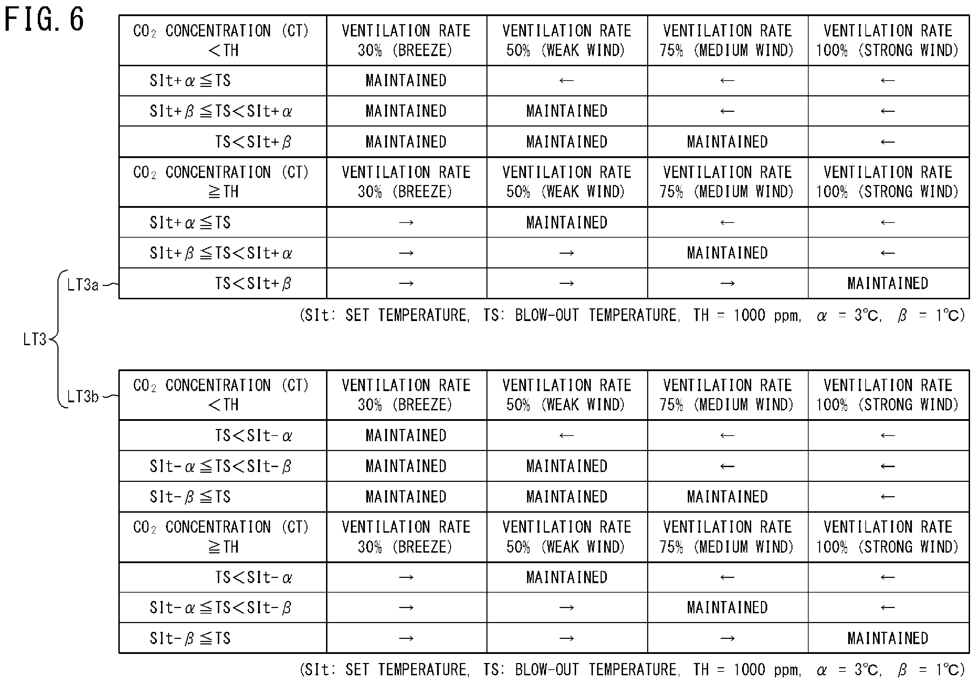

Third mode: An intermediate control mode in which, among the state information CT and the blow-out temperature TS that can be used to adjust the indoor ventilation rate, neither the state information CT nor the blow-out temperature TS has a higher weighting. For example, "balance priority" using the reference table in FIG. 6 described later is a type of the third mode.

As illustrated in FIG. 2, the control system of the ventilation system 1 includes a control unit CU composed of a group of controllers that perform wired or wireless communication. The control unit CU includes the main controller 55, the air supply controller 25, and the exhaust controller 44.

The main controller 55 is connected to the input device 70. When the user inputs SI to the input device 70, the input device 70 transmits the SI to the main controller 55. The main controller 55 records the received SI in its own memory.

The main controller 55 is connected to each of the temperature-related sensors 24, 13, and 33. The main controller 55 receives TS, TO, and TR from the sensors 24, 13, and 33.

If the supply air temperature sensor 24 is connected to the air supply controller 25, the TS may be transmitted to the main controller 55 with the air supply controller 25 as a relay node.

The main controller 55 is connected to the air supply controller 25, a second controller 25B, and the exhaust controller 44.

Upon determining TV1, the main controller 55 transmits the determined TV1 to the air supply controller 25, and upon determining TV2, the main controller 55 transmits the determined TV2 to the exhaust controller 44.

The main controller 55 is connected to the compressor 52, the four-way valve 53, and the expansion valve 54. Upon determining CQ, the main controller 55 outputs the determined CQ to at least one of the compressor 52, the four-way valve 53, and the expansion valve 54.

The air supply controller 25 is connected to the air supply fan 22, the air supply detector 23, and the $CO_2$ sensor 80.

The air supply controller 25 transfers the CT received from the $CO_2$ sensor 80 to the main controller 55. If the $CO_2$ sensor 80 is connected to the main controller 55, CT is directly transmitted to the main controller 55.

If the air supply detector 23 is an airflow sensor, the air supply controller 25 sets the detection result received from the detector 23 as AF1.

If the air supply detector 23 is an airflow equivalent sensor, the air supply controller 25 calculates AF1 from the detection result received from the detector 23. The air supply controller 25 may set the airflow calculated from the fan speed counted by itself as AF1.

Upon receiving the TV1, the air supply controller 25 calculates fan speed on the basis of the TV1 and the AF1, and outputs the calculated speed to the air supply fan 22.

The exhaust controller 44 is connected to the exhaust fan 42 and the exhaust detector 43.

If the exhaust detector 43 is an airflow sensor, the exhaust controller 44 sets the detection result received from the detector 43 as AF2.

If the exhaust detector 43 is an airflow equivalent sensor, the exhaust controller 44 calculates AF2 from the detection result received from the detector 43. The exhaust controller 44 may set the airflow calculated from the fan speed counted by itself as AF2.

Upon receiving the TV2, the exhaust controller 44 calculates the fan speed on the basis of the TV 2 and the AF2, and outputs the calculated speed to the exhaust fan 42.

[Information Processing of Main Controller]

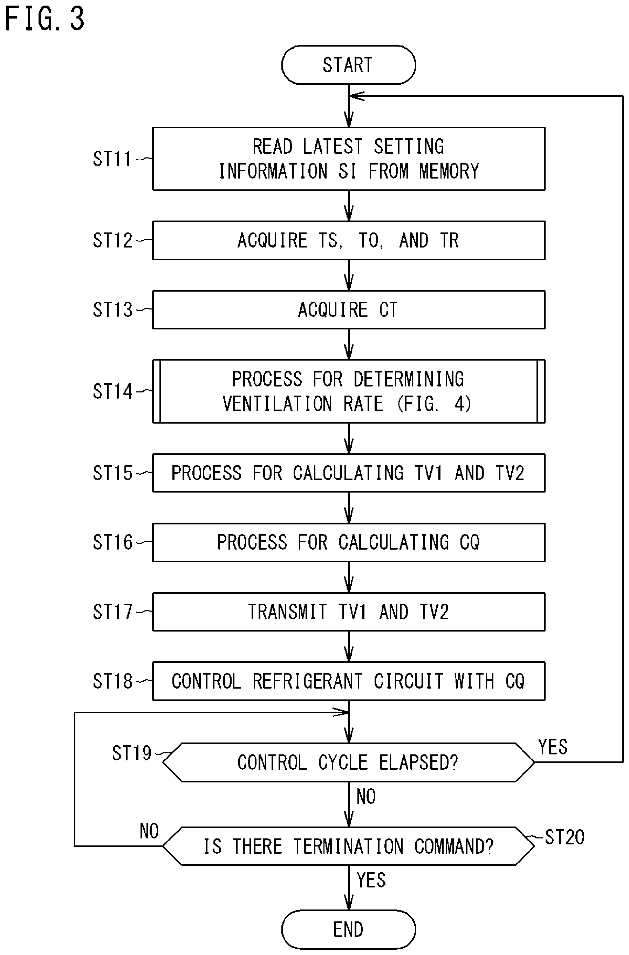

FIG. 3 is a flowchart illustrating an example of information processing of the main controller 55.

As illustrated in FIG. 3, the main controller 55 reads the latest setting information SI from the memory after startup (step ST11).

The setting information SI includes SIc that is the setting information of ventilation rate, SIt that is the set temperature of the supply air SA, and SIm that is the setting information of control mode type.

Next, the main controller 55 acquires TS, TO, and TR, which are detection results related to temperature (step ST12), and CT, which is the detection result of $CO_2$ concentration in the target space RM (step ST13).

Next, the main controller 55 executes a ventilation rate determination process (step ST14). The content of the ventilation rate determination process varies depending on the type of control mode, and will be described later.

Next, the main controller 55 calculates, from the determined ventilation rate, TV1 that is a target value of the supply airflow and TV2 that is a target value of the exhaust airflow (step ST15).

For example, the main controller 55 reads the supply airflow corresponding to the determined ventilation rate (%) from the reference table, and sets the read airflow as TV1. Furthermore, if air supply and exhaust are to be balanced, the main controller 55 sets TV2 = TV1.

Next, the main controller 55 executes a process for calculating CQ, which is a controlled variable for the refrigerant circuit 60 (step ST16). This calculation process calculates CQ on the basis of the TV1 and TV2 determined in the current control cycle.

For example, the main controller 55 calculates a temperature adjustment load for bringing the supply air SA to the set temperature SIt from the TV1 and TV2 determined in the current control cycle and the current TS, TO, and TR, and determines CQ, which is a controlled variable for the refrigerant circuit 60, on the basis of the calculated temperature control load.

Next, the main controller 55 transmits the determined TV1 and TV2 to the controllers 25 and 44, respectively (step ST17).

Specifically, the main controller 55 transmits the TV1 to the air supply controller 25, and transmits the TV2 to the exhaust controller 44.

Next, the main controller 55 controls the refrigerant circuit 60 with the CQ determined in the step ST15 (step ST18), and determines whether or not a predetermined control cycle (for example, 30 seconds) has elapsed (step ST19).

If the determination result in the step ST19 is positive, the main controller 55 returns the process to before the step ST11.

If the determination result in the step ST19 is negative, the main controller 55 determines the presence or absence of a termination command from the input device 70 (step ST20).

If the determination result in the step ST20 is negative, the main controller 55 returns the process to before the ST19. If the determination result in step ST19 is positive, the main controller 55 terminates the process.

[Process for Determination of Ventilation Rate]

FIG. 4 to FIG. 6 are reference tables LT1 to LT3 for use in a process (step ST14 in FIG. 3) for determining the ventilation rate.

Specifically, FIG. 4 is the reference table LT1 when SIm is "ventilation priority" (first mode). FIG. 5 is the reference table LT2 when SIm is "temperature adjustment priority" (second mode). FIG. 6 is the reference table LT3 when SIm is "balance control" (third mode).

In the first control cycle after startup, the main controller 55 adopts the type (breeze, weak wind, medium wind, or strong wind) designated by SIc as an initial value, and in the current control cycle which is the second or subsequent control cycle, determines the ventilation rate according to one of the reference tables LT1 to LT3 designated by SIm.

Specifically, if SIm is ventilation priority (first mode), the main controller 55 determines the ventilation rate for the current cycle using the reference table LT1 in FIG. 4.

Similarly, the main controller 55 determines the ventilation rate for the current cycle using the reference table TL2 in FIG. 5 if SIm is temperature adjustment priority (second mode), and determines the ventilation rate of the current cycle using the reference table TL3 in FIG. 6 if SIm is balance control (third mode).

In FIG. 4 to FIG. 6, "MAINTAINED" means that the current ventilation rate (ventilation rate determined in the previous cycle) is to be followed. In addition, the "rightward arrow" means that the current ventilation rate is to be increased by one stage in the current cycle, and the "leftward arrow" means that the current ventilation rate is to be decreased by one stage in the current cycle.

"TH" is a threshold related to the CO2 concentration (CT), and is set to, for example, 1000 ppm. 1000 ppm is an example, and other values such as 1200 ppm may be used.

"$\alpha$" is a larger threshold margin for defining a threshold related to the blow-out temperature (TS), and is set to, for example, 3°C. "$\beta$" is a smaller threshold margin for defining a threshold related to the blow-out temperature (TS), and is set to, for example, 1°C. 3°C and 1°C are examples, and other values such as 4°C and 2° are acceptable.

(In case of ventilation priority)

As illustrated in FIG. 4, the reference table LT1 defines whether to maintain or change the current ventilation rate according to the numerical range of the CO2 concentration (CT).

Therefore, in the ventilation priority in FIG. 4, which is an example of the first mode, the data used for adjusting the ventilation rate includes CT which is the detection result of the CO2 sensor 80, but does not include TS which is the detection result of the supply air temperature sensor 24.

In the determination process using the reference table LT1, if the CO2 concentration (CT) < TH, the main controller 55 maintains the ventilation rate of the previous cycle for all ventilation rate types.

In the determination process using the reference table LT1, if the CO2 concentration (CT) $\geq$ TH, the main controller 55 increases by one stage the previous cycle's breeze, weak wind, or medium wind and maintains the previous cycle's strong wind.

As described above, in the ventilation-priority control mode, since the ventilation rate is determined only by the CT value without considering the TS value, for example, as illustrated in the reference table LT1 in FIG. 4, if CT $\geq$ TH, the

ventilation rate can be controlled to increase except for the maximum ventilation rate (strong wind).

Therefore, if rapid ventilation is required due to a high CO2 concentration, the ventilation function of the ventilation system 1 can be prioritized.

(In case of temperature adjustment priority)

As illustrated in FIG. 5, the reference table LT2 defines whether to maintain or change the ventilation rate with respect to the current state, according to the numerical range of the blow-out temperature (TS).

Therefore, in the temperature adjustment priority in FIG. 5 which is an example of the second mode, the data used for adjusting the ventilation rate includes TS which is the detection result of the supply air temperature sensor 24, but does not include CT which is the detection result of the CO2 sensor 80. The reference table LT2 for temperature adjustment priority includes a reference table LT2a for cooling and a reference table LT2b for heating.

In the determination process according to the reference table LT2a, the main controller 55 executes the following process according to the numerical range of TS.

- 

$$\text{If } SIt + \alpha \leq TS:$$

The previous cycle's breeze is maintained and the previous cycle's weak wind, medium wind, or strong wind is decreased by one stage.

- 

$$\text{If } SIt + \beta \leq TS < SIt + \alpha:$$

The previous cycle's breeze or weak wind is maintained, and the previous cycle's medium wind or strong wind is decreased by one stage.

- 

$$\text{If } TS < SIt + \beta:$$

The previous cycle's breeze, weak wind, or medium wind is maintained, and the previous cycle's strong wind is decreased by one stage.

In the determination process according to the reference table LT2b, the main controller 55 executes the following process according to the numerical range of TS.

- 

$$\text{If } TS < SIt - \alpha$$

The previous cycle's breeze is maintained and the previous cycle's weak wind, medium wind, or strong wind is decreased by one stage.

- 

$$\text{If } SIt - \alpha \leq TS < SIt - \beta:$$

The previous cycle's breeze and weak wind are maintained, and the previous cycle's medium wind or strong wind is decreased by one stage.

- 

$$\text{If } SIt - \beta \leq TS:$$

The previous cycle's breeze, weak wind, or medium wind is maintained, and the previous cycle's strong wind is decreased by one stage.

As described above, in the temperature-priority control mode, since the ventilation rate is determined only by the TS value without considering the CT value, for example, as illustrated in the reference table LT2 in FIG. 5, the greater the degree of deviation of TS from SIt, the greater the opportunity to decrease the ventilation rate, thereby enabling control to reduce the load on temperature adjustment. Thus, it is easier to indirectly adjust TS to the set temperature SIt, and the temperature adjustment function of the ventilation system 1 can be prioritized.

(Balance control)

As illustrated in FIG. 6, the reference table LT3 defines whether to maintain or change the ventilation rate with respect to the current state according to the numerical range of the CO2 concentration (CT) and the numerical range of the blow-out temperature (TS).

Therefore, in the balance control in FIG. 6 which is an example of the third mode, the data used for adjusting the ventilation rate includes both the CT which is the detection result of the CO2 sensor 80 and the TS which is the detection result of the supply air temperature sensor 24. The reference table LT3 for balance control includes a reference table LT3a for cooling and a reference table LT3b for heating.

In the determination process according to the reference table LT3a, the main controller 55 executes the following process according to the numerical ranges of CT and TS.

•

$$\text{If } CT < TH \text{ and } SIt + \alpha \leq TS:$$

The previous cycle's breeze is maintained and the previous cycle's weak wind, medium wind, and strong wind are decreased by one stage.

.

$$\text{If } CT < TH \text{ and } SIt + \beta \leq TS < SIt + \alpha:$$

The previous cycle's breeze or weak wind is maintained, and the previous cycle's medium wind or strong wind is decreased by one stage.

.

$$\text{If } CT < TH \text{ and } TS < SIt + \beta:$$

The previous cycle's breeze, weak wind, or medium wind is maintained, and the previous cycle's strong wind is decreased by one stage.

.

$$\text{If } CT \geq TH \text{ and } SIt + \alpha \leq TS:$$

The previous cycle's breeze is increased by one stage, the previous cycle's weak wind is maintained, and the previous cycle's medium wind or strong wind is decreased by one stage.

.

$$\text{If } CT \geq TH \text{ and } SIt + \beta \leq TS < SIt + \alpha:$$

The previous cycle's breeze or weak wind is increased by one stage, the previous cycle's medium wind is maintained, and the previous cycle's strong wind is decreased by one stage.

•

$$\text{If } CT \geq TH \text{ and } TS < SIt + \beta:$$

The previous cycle's breeze, weak wind, or medium wind is increased by one stage, and the previous cycle's strong wind is maintained.

In the determination process according to the reference table LT3b, the main controller 55 executes the following process according to the numerical ranges of CT and TS.

•

$$\text{If } CT < TH \text{ and } TS < SIt - \alpha:$$

The previous cycle's breeze is maintained and the previous cycle's weak wind, medium wind, and strong wind are decreased by one stage.

•

$$\text{If } CT < TH \text{ and } SIt - \alpha \leq TS < SIt - \beta:$$

The previous cycle's breeze or weak wind is maintained, and the previous cycle's medium wind or strong wind is decreased by one stage.

•

$$\text{If } CT < TH \text{ and } SIt - \beta \leq TS:$$

The previous cycle's breeze, weak wind, or medium wind is maintained, and the previous cycle's strong wind is decreased by one stage.

•

$$\text{If } CT \geq TH \text{ and } TS < SIt - \alpha:$$

The previous cycle's breeze is increased by one stage, the previous cycle's weak wind is maintained, and the previous cycle's medium wind or strong wind is decreased by one stage.

•

$$\text{If } CT \geq TH \text{ and } SIt - \alpha \leq TS < SIt - \beta:$$

The previous cycle's breeze or weak wind is increased by one stage, the previous cycle's medium wind is maintained, and the previous cycle's strong wind is decreased by one stage.

•

$$\text{If } CT \geq TH \text{ and } SIt - \beta \leq TS:$$

The previous cycle's breeze, weak wind, or medium wind is increased by one stage, and the previous cycle's strong wind is maintained.

As described above, in the control mode of balance control, for example, as illustrated in the reference table LT3 in FIG. 6, if CT < TH, control (the upper half of LT3a and LT3b) is performed to prioritize ventilation rate reduction in the same manner as the temperature adjustment priority, and if CT ≥ TH, control (the lower half of LT3a and LT3b) is performed to change the rate of ventilation to be finally converged according to the numerical range of TS. Therefore, intermediate control that cannot be said to have a higher weighting for either CT or TS is performed.

This allows for flexible operation in which the ventilation function and temperature adjustment function of the ventilation system 1 are moderately balanced.

[Information Processing of Air Supply and Exhaust Controller]

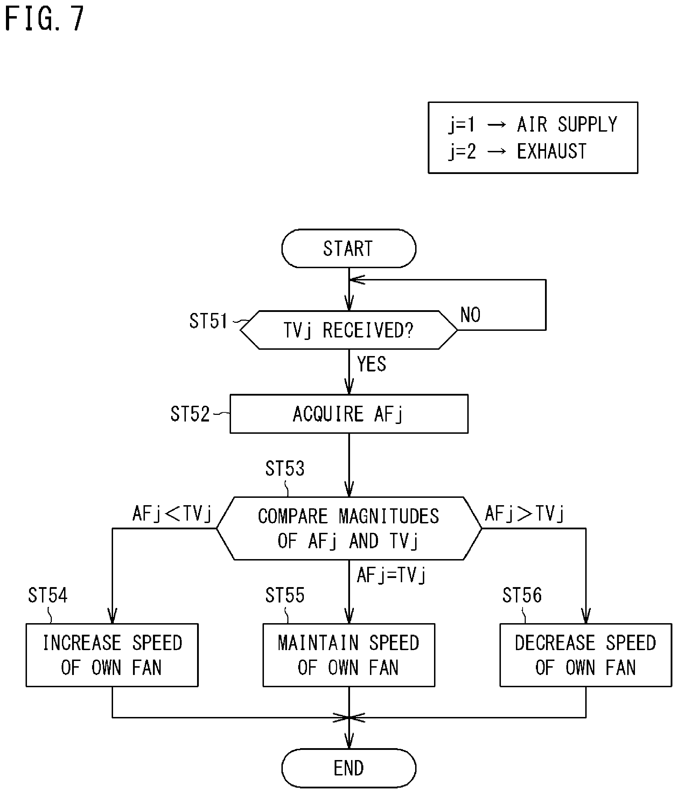

FIG. 7 is a flowchart illustrating an example of information processing of the air supply and exhaust controllers 25 and 44.

In FIG. 7, the suffix "j" is an identification number representing air supply or exhaust. j=1 means air supply and j=2 means exhaust. Therefore, FIG. 7 represents the information processing of the air supply controller 25 when j=1, and represents the information processing of the exhaust controller 44 when j=2.

As illustrated in FIG. 7, after startup, each of the controllers 25 and 44 determines whether or not TVj has been received from the main controller 55 (step ST51), and if so, acquires AFj from the detection results of its own detector 23, 43 (step ST52).

Next, the controllers 25 and 44 compare the magnitudes of AFj and TVj (step ST53), and execute the following process according to the comparison result.

That is, if AFj < TVj, each of the controllers 25 and 44 increases the rotational speed of its own fan 22, 42 by a predetermined amount (step ST54). If AFj = TVj, the rotational speed is maintained (step ST55), and if AFj > TVj, the rotational speed is decreased by a predetermined amount (step ST56).

In this manner, the air supply and exhaust controllers 25 and 44 autonomously adjust the rotational speed of their own fans 22 and 42 on the basis of the TVj received from the main controller 55 and the AFj that can be detected by their own detectors 23 and 43.

[First Modification]

In the above-described embodiment, a process (step ST14 in FIG. 3) for determining the ventilation rate is executed by the plurality of reference tables LT1 to LT3, but the main controller 55 may execute the process for determining the ventilation rate using, for example, the following Formula (1). However, the meaning of each parameter in Formula (1) is as described later.

$$QV = A \times (TS - SIt) + B \times (CT - TH) + C\,(SIt,\ TH)......(1)$$

QV: Ventilation rate (target value of supply airflow)
A: Weight coefficient that defines the degree of influence of the deviation of blow-out temperature from the set value on the ventilation rate
B: Weight coefficient that defines the degree of influence of the deviation of $CO_2$ concentration from the set value on the ventilation rate
C (SIt, TH): Function representing the ventilation rate when the blow-out temperature and the $CO_2$ concentration are set values
TS: blow-out temperature (detection result of the air supply fan 22)
SIt: Set temperature (set value)
CT: $CO_2$ concentration (detection result of the $CO_2$ sensor 80)
TH: $CO_2$ concentration threshold (set value)

In this case, it is sufficient to analyze the function C (SIt, TH) in Formula (1) by experiment, an air conditioning simulator, or the like.

For the coefficients A and B, in the case of the first mode (ventilation priority), it is sufficient to determine the numerical values of A and B so that the weighting is A < B (A=0 is also acceptable). Furthermore, in the case of the second mode (temperature adjustment priority), it is sufficient to determine the numerical values of A and B so that the weighting is A > B (B=0 is also acceptable).

[Second Modification]

In the above-described embodiment, an "intervention mode" that responds to the detection of a very large $CO_2$ concentration (CT) may be provided as a control mode of the main controller 55 not included in the SIm.

Specifically, if CT, which is the detection result of the monitoring sensor 80, exceeds a predetermined threshold value (for example, 1500 ppm) greater than TH, the ventilation priority may be executed regardless of the SIm input to the input device 70.

[Third Modification]

In the above-described embodiment, the CO2 sensor is exemplified as an example of the indoor monitoring sensor 80, but the monitoring sensor 80 may be, for example, the following sensors.

1) Suspended particle sensor: a sensor that detects the concentration of suspended particles such as smoke and dust
2) Odor sensor: a sensor that detects the degree of indoor odor
3) Presence sensor: a sensor that detects the presence or absence of people in a room
4) Number-of-people count sensor: a sensor that detects the number of people in a room

In the case of adopting the suspended particle sensor, it is only required to perform control to increase the ventilation rate when the particle concentration becomes a predetermined value or more, and in the case of adopting the odor sensor, it is only required to perform control to increase the ventilation rate when the degree of odor becomes a predetermined value or more.

Similarly, in the case of adopting the presence sensor, it is only required to perform control to increase the ventilation rate in response to the detection of the presence of people, and in the case of adopting the number-of-people count sensor is adopted, it is only required to perform control to increase the ventilation rate when the number of people becomes a predetermined value or more.

As described above, the monitoring sensor 80 that can be employed in the ventilation system 1 according to the present embodiment is not limited to the CO2 sensor, and may be any sensor that detects state information (such as CO2 concentration, particle concentration, odor level, presence or absence of people, and number of people), which is at least one of an indoor air state, the presence or absence of people indoors, and the number of people indoors.

[Fourth Modification]

In the above-described embodiment, the input device 70 is of a type that, when installed in the management room, can limit the user who inputs SIm, which is the control mode type information, to a building manager or the like.

However, the devices capable of limiting the users who inputs the control mode type information are not limited to the above, and for example, the following devices may be employed.

1) Dip switches mounted on the circuit boards or the like of the main controller 55
2) Dedicated switches provided on the control panel of the compressor unit 50
3) A remote controller 70 that requires password input to launch an SIm input screen
4) A communication terminal (laptop PC, tablet PC, smartphone, or the like) that communicates with the main controller 55 via a dedicated line
5) A communication terminal (laptop PC, tablet PC, smartphone, or the like) that can communicate with the main controller 55 over a public line and requires password input before setting SIm

[Fifth Modification]

The above-described embodiment exemplifies the configuration of the air path in which M = N = 1, where M is the number of fans on the air supply side for one room RM and N is the number of fans on the exhaust side. However, both the number M of fans and the number N of fans may be two or more. Further, the number M of fans and the number N of fans may be different from each other.

If the number M of fans is two or more, it is sufficient if the total airflow of the M fans is set as the supply airflow to one room RM.

In addition, if the number N of fans is two or more, it is sufficient if the total airflow of the N fans is set as the exhaust airflow from one room RM.

[Operation and Effect of Embodiment]

(1) Since the ventilation system 1 according to the present embodiment includes the following first mode and second mode as the types of control modes performed by the control unit CU (specifically, the main controller 55), it is possible to diversify the control modes related to ventilation function and temperature adjustment function in the ventilation system 1 capable of recovering heat from the return air.

First mode (ventilation priority): A control mode having higher weighting on the state information CT, among the state information CT and the blow-out temperature TS that are usable for adjusting the indoor ventilation rate. For example, the control mode uses the reference table LT1 in FIG. 4 or Formula (1) with A < B weighting.

Second mode (temperature adjustment priority): A control mode having higher weighting on the blow-out temperature TS, among the state information CT and the blow-out temperature TS that are usable for adjusting the indoor ventilation rate. For example, the control mode uses the reference table LT2 in FIG. 5 or Formula (1) with A > B weighting.

(2) Since the ventilation system 1 according to the present embodiment includes the input equipment 70 including the control mode type information SIm of the control modes as the setting information SI that can be input by a user, the user can set the ventilation system 1 whether to operate in the first mode or the second mode.

(3) In the ventilation system 1 according to the present embodiment, the input equipment 70 is capable of limiting the user who inputs the type information SIm of the control modes. Thus, the user who inputs the type information of the control modes can be limited to, for example, a building manager.

Therefore, it is possible to prevent the occupants of a room, which is the target space RM of the ventilation system 1, from arbitrarily changing the control modes.

(4) In the ventilation system 1 according to the present embodiment, the control unit CU (specifically, the main controller 55) executes the first mode (ventilation priority) regardless of the control mode type information SIm input to the input equipment 70, if the detection result of the monitoring sensor 80 exceeds a predetermined threshold value.

Therefore, it is possible to more quickly improve a deteriorated indoor environment (for example, $CO_2$ concentration exceeding the reference amount) as compared with the case where the temperature adjustment priority or the balance control is continued.

(5) In the ventilation system 1 according to the present embodiment, the control unit CU (specifically, the main controller 55) is further capable of executing the third mode (balance control) for determining whether to decrease, maintain or increase the current ventilation rate on the basis of at least the detection result TS of the temperature sensor, the set value SIt of the blow-out temperature, the detection result CT of the monitoring sensor, and the set value TH of the state information. Therefore, it is possible to perform flexible operation in which ventilation function and temperature adjustment function are moderately balanced.

[Others]

The present invention is not limited to the above exemplification, but is defined by claims, and is intended to include all modifications within the scope of the claims.

REFERENCE SIGNS LIST

| | |
|---|---|
| 1 | ventilation system |
| 12 | first heat exchanger |
| 20 | air supply unit |
| 22 | air supply fan |
| 23 | air supply detector |
| 24 | supply air temperature sensor |
| 25 | air supply controller |
| 32 | second heat exchanger |
| 33 | return air temperature sensor |
| 40 | exhaust unit |
| 42 | exhaust fan |
| 43 | exhaust detector |
| 44 | exhaust controller |
| 52 | compressor |
| 53 | four-way valve |
| 54 | expansion valve |
| 55 | main controller |
| 60 | refrigerant circuit |
| 61 | refrigerant pipe |
| 70 | input device (remote controller) |

80      monitoring sensor (CO2 sensor)
RM      target space (room)
CU      control unit
AF1     supply airflow
AF2     exhaust airflow
TV1     target value of supply airflow
TV2     target value of exhaust airflow
CQ      controlled variable for refrigerant circuit
SI      setting information
SIm     control mode type information
SIt     set temperature of supply air (set value of blow-out temperature)
SIc     ventilation rate type information
CT      $CO_2$ concentration and state information (detection results of $CO_2$ sensor and monitoring sensor)
TS      blow-out temperature (detection result of supply air sensor)
TH      threshold value ($CO_2$ concentration and state information set value)

**Claims**

1. A ventilation system comprising:

    a refrigerant circuit (60) that circulates refrigerant through a compressor (52), a first heat exchanger (12), and a second heat exchanger (32);
    an air supply fan (22) that draws outdoor air into an indoor space through the first heat exchanger (12);
    an exhaust fan (42) that exhausts indoor air to an outdoor space through the second heat exchanger (32);
    a temperature sensor (24) for detecting a blow-out temperature (TS) of the air supply fan (22);
    a monitoring sensor (80) for detecting state information (CT) that is at least one of an indoor air state, presence or absence of people indoors, and number of people indoors; and
    a control unit (CU) that adjusts indoor ventilation rate,
    **characterized in that** types of control modes performed by the control unit (CU) include a first mode and a second mode described below:

    First mode: A control mode having higher weighting on the state information (CT), among the state information (CT) and the blow-out temperature (TS) that are usable for adjusting indoor ventilation rate;
    Second mode: A control mode having higher weighting on the blow-out temperature (TS), among the state information (CT) and the blow-out temperature (TS) that are usable for adjusting indoor ventilation rate.

2. The ventilation system (1) according to claim 1, further comprising an input equipment (70) including type information (SIm) of the control modes as setting information (SI) that can be input by a user.

3. The ventilation system according to claim 2, wherein the input equipment (70) is capable of limiting the user who inputs the type information (SIm) of the control modes.

4. The ventilation system according to claim 2 or 3, wherein the control unit (CU) executes the first mode regardless of the control mode type information (SIm) input to the input equipment when a detection result (CT) of the monitoring sensor (80) exceeds a predetermined threshold value

5. The ventilation system according to any one of claims 1 to 4, wherein the control unit (CU) is further capable of executing a third mode for determining whether to decrease, maintain, or increase the current ventilation rate on a basis of at least a detection result (TS) of the temperature sensor, a set value (SIt) of the blow-out temperature, the detection result (CT) of the monitoring sensor, and a set value (TH) of the state information.

**Patentansprüche**

1. Lüftungssystem, umfassend:

    einen Kältemittelkreislauf (60), der Kältemittel durch einen Verdichter (52), einen ersten Wärmetauscher (12) und einen zweiten Wärmetauscher (32) zirkuliert;

ein Luftzufuhrgebläse (22), das Außenluft durch den ersten Wärmetauscher (12) in einen Innenraum zieht;

ein Abluftgebläse (42), das Innenraumluft durch den zweiten Wärmetauscher (32) in einen Außenraum abgibt;

einen Temperatursensor (24) zum Erfassen einer Ausblastemperatur (TS) des Luftzufuhrgebläses (22);

einen Überwachungssensor (80) zum Erfassen von Zustandsinformationen (CT), die mindestens eines von einem Innenraumluftzustand, der Anwesenheit oder Abwesenheit von Personen in Innenräumen und der Anzahl von Personen in Innenräumen sind; und

eine Steuereinheit (CU), die die Innenraumlüftungsrate einstellt,

**dadurch gekennzeichnet, dass** Typen von Steuermodi, die von der Steuereinheit (CU) durchgeführt werden, einen ersten Modus und einen zweiten Modus umfassen, die nachstehend beschrieben sind:

Erster Modus: Ein Steuermodus mit einer höheren Gewichtung auf die Zustandsinformationen (CT) unter den Zustandsinformationen (CT) und der Ausblastemperatur (TS), die zum Einstellen der Innenraumlüftungsrate verwendbar sind;

Zweiter Modus: Ein Steuermodus mit einer höheren Gewichtung auf die Ausblastemperatur (TS) unter den Zustandsinformationen (CT) und der Ausblastemperatur (TS), die zum Einstellen der Innenraumlüftungsrate verwendbar sind.

2. Lüftungssystem (1) nach Anspruch 1, ferner umfassend eine Eingabeeinrichtung (70), die Typinformationen (SIm) der Steuermodi als Einstellinformationen (SI) umfasst, die von einem Benutzer eingegeben werden können.

3. Lüftungssystem nach Anspruch 2, wobei die Eingabeeinrichtung (70) in der Lage ist, den Benutzer zu begrenzen, der die Typinformationen (SIm) der Steuermodi eingibt.

4. Lüftungssystem nach Anspruch 2 oder 3, wobei die Steuereinheit (CU) den ersten Modus unabhängig von den Steuermodustypinformationen (SIm) ausführt, die in die Eingabeeinrichtung eingegeben werden, wenn ein Erfassungsergebnis (CT) des Überwachungssensors (80) einen vorbestimmten Schwellenwert überschreitet.

5. Lüftungssystem nach einem der Ansprüche 1 bis 4, wobei die Steuereinheit (CU) ferner in der Lage ist, einen dritten Modus zum Bestimmen, ob die aktuelle Lüftungsrate auf einer Basis von mindestens einem Erfassungsergebnis (TS) des Temperatursensors, einem eingestellten Wert (SIt) der Ausblastemperatur, dem Erfassungsergebnis (CT) des Überwachungssensors und einem eingestellten Wert (TH) der Zustandsinformationen verringert, aufrechterhalten oder erhöht werden soll, auszuführen.

## Revendications

1. Système de ventilation comprenant :

un circuit de réfrigérant (60) assurant la circulation d'un réfrigérant dans un compresseur (52), un premier échangeur de chaleur (12), et un deuxième échangeur de chaleur (32) ;

un ventilateur de fourniture d'air (22) extrayant de l'air de l'extérieur et l'introduisant dans un espace intérieur à travers le premier échangeur de chaleur (12) ;

un ventilateur d'évacuation (42) refoulant de l'air d'intérieur dans un espace extérieur à travers le deuxième échangeur de chaleur (32) ;

un capteur de température (24) pour détecter une température de soufflage (TS) du ventilateur de fourniture d'air (22) ;

un capteur de contrôle (80) pour détecter des informations d'état (CT) consistant en au moins une des suivantes : état de l'air ambiant, présence ou absence de personnes à l'intérieur, et nombre de personnes à l'intérieur ; et

un régulateur (CU) servant à ajuster le débit de ventilation à l'intérieur,

**caractérisé en ce que**

des types de modes de régulation effectués par le régulateur (CU) comprennent un premier mode et un deuxième mode décrits ci-dessous :

premier mode : un mode de régulation à pondération supérieure sur les informations d'état (CT), parmi les informations d'état (CT) et la température de soufflage (TS), utilisables pour ajuster le débit de ventilation d'intérieur ;

deuxième mode : un mode de régulation à pondération supérieure sur la température de soufflage (TS), parmi les informations d'état (CT) et la température de soufflage (TS) utilisables pour ajuster le débit de ventilation d'intérieur.

2. Système de ventilation (I) selon la revendication 1, comprenant en outre un équipement d'entrée (70) comprenant des informations de type (SIm) des modes de régulation en tant qu'informations de paramétrage (SI) pouvant être introduites par un utilisateur.

3. Système de ventilation selon la revendication 2, l'équipement d'entrée (70) étant en mesure de limiter l'utilisateur entrant les informations de type (SIm) des modes de régulation.

4. Système de ventilation selon la revendication 2 ou 3, le régulateur (CU) exécutant le premier mode indépendamment des informations de type du mode de régulation (SIm) introduites dans l'équipement d'entrée lorsque le résultat d'une détection (CT) du capteur de contrôle (80) dépasse un seuil prédéterminé.

5. Système de ventilation selon une quelconque des revendications 1 à 4, le régulateur (CU) étant en mesure, en outre, d'exécuter un troisième mode pour déterminer la nécessité de réduire, maintenir, ou augmenter le débit de ventilation en cours en fonction d'au moins un résultat d'une détection (TS) du capteur de température, d'une valeur de consigne (SIt) de la température de soufflage, du résultat d'une détection (CT) du capteur de contrôle, et d'une valeur de consigne (TH) des informations d'état.

FIG. 1

FIG. 2

# FIG. 3

```
                      ┌─────────────┐
                      │    START    │
                      └─────────────┘
                             │
                             ▼
ST11 ─┌──────────────────────────────────────┐
      │         READ LATEST SETTING           │
      │     INFORMATION SI FROM MEMORY        │
      └──────────────────────────────────────┘
                             │
                             ▼
ST12 ─┌──────────────────────────────────────┐
      │        ACQUIRE TS, TO, AND TR         │
      └──────────────────────────────────────┘
                             │
                             ▼
ST13 ─┌──────────────────────────────────────┐
      │              ACQUIRE CT               │
      └──────────────────────────────────────┘
                             │
                             ▼
ST14 ─┌──────────────────────────────────────┐
      │       PROCESS FOR DETERMINING         │
      │      VENTILATION RATE (FIG. 4)        │
      └──────────────────────────────────────┘
                             │
                             ▼
ST15 ─┌──────────────────────────────────────┐
      │    PROCESS FOR CALCULATING TV1 AND TV2 │
      └──────────────────────────────────────┘
                             │
                             ▼
ST16 ─┌──────────────────────────────────────┐
      │       PROCESS FOR CALCULATING CQ       │
      └──────────────────────────────────────┘
                             │
                             ▼
ST17 ─┌──────────────────────────────────────┐
      │          TRANSMIT TV1 AND TV2          │
      └──────────────────────────────────────┘
                             │
                             ▼
ST18 ─┌──────────────────────────────────────┐
      │    CONTROL REFRIGERANT CIRCUIT WITH CQ │
      └──────────────────────────────────────┘
                             │
                             ▼
ST19 ─< CONTROL CYCLE ELAPSED? >──── YES
                             │ NO
                             ▼
      < IS THERE TERMINATION COMMAND? >─ ST20
          NO                 │ YES
                             ▼
                      ┌─────────────┐
                      │     END     │
                      └─────────────┘
```

# FIG. 4

| | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
|---|---|---|---|---|
| $CO_2$ CONCENTRATION (CT) $<$ TH | MAINTAINED | MAINTAINED | MAINTAINED | MAINTAINED |
| $CO_2$ CONCENTRATION (CT) $\geqq$ TH | → | → | → | MAINTAINED |

(TH = 1000 ppm)

LT1

# FIG. 5

LT2 { LT2a

|  | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
|---|---|---|---|---|
| $SIt+\alpha \leqq TS$ | MAINTAINED | ← | ← | ← |
| $SIt+\beta \leqq TS < SIt+\alpha$ | MAINTAINED | MAINTAINED | ← | ← |
| $TS < SIt+\beta$ | MAINTAINED | MAINTAINED | MAINTAINED | ← |

(SIt: SET TEMPERATURE, TS: BLOW-OUT TEMPERATURE, $\alpha$ = 3℃, $\beta$ = 1℃)

LT2b

|  | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
|---|---|---|---|---|
| $TS < SIt-\alpha$ | MAINTAINED | ← | ← | ← |
| $SIt-\alpha \leqq TS < SIt-\beta$ | MAINTAINED | MAINTAINED | ← | ← |
| $SIt-\beta \leqq TS$ | MAINTAINED | MAINTAINED | MAINTAINED | ← |

(SIt: SET TEMPERATURE, TS: BLOW-OUT TEMPERATURE, $\alpha$ = 3℃, $\beta$ = 1℃)

# FIG. 6

| $CO_2$ CONCENTRATION (CT) <TH | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
|---|---|---|---|---|
| $SIt+\alpha \leqq TS$ | MAINTAINED | ← | ← | ← |
| $SIt+\beta \leqq TS < SIt+\alpha$ | MAINTAINED | MAINTAINED | ← | ← |
| $TS < SIt+\beta$ | MAINTAINED | MAINTAINED | MAINTAINED | ← |
| $CO_2$ CONCENTRATION (CT) ≧TH | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
| $SIt+\alpha \leqq TS$ | → | MAINTAINED | ← | ← |
| $SIt+\beta \leqq TS < SIt+\alpha$ | → | → | MAINTAINED | ← |
| $TS < SIt+\beta$ | → | → | → | MAINTAINED |

(SIt: SET TEMPERATURE, TS: BLOW-OUT TEMPERATURE, TH = 1000 ppm, $\alpha$ = 3℃, $\beta$ = 1℃)

LT3 { LT3a, LT3b }

| $CO_2$ CONCENTRATION (CT) <TH | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
|---|---|---|---|---|
| $TS < SIt-\alpha$ | MAINTAINED | ← | ← | ← |
| $SIt-\alpha \leqq TS < SIt-\beta$ | MAINTAINED | MAINTAINED | ← | ← |
| $SIt-\beta \leqq TS$ | MAINTAINED | MAINTAINED | MAINTAINED | ← |
| $CO_2$ CONCENTRATION (CT) ≧TH | VENTILATION RATE 30% (BREEZE) | VENTILATION RATE 50% (WEAK WIND) | VENTILATION RATE 75% (MEDIUM WIND) | VENTILATION RATE 100% (STRONG WIND) |
| $TS < SIt-\alpha$ | → | MAINTAINED | ← | ← |
| $SIt-\alpha \leqq TS < SIt-\beta$ | → | → | MAINTAINED | ← |
| $SIt-\beta \leqq TS$ | → | → | → | MAINTAINED |

(SIt: SET TEMPERATURE, TS: BLOW-OUT TEMPERATURE, TH = 1000 ppm, $\alpha$ = 3℃, $\beta$ = 1℃)

EP 4 450 882 B1

# FIG. 7

$j=1 \rightarrow$ AIR SUPPLY
$j=2 \rightarrow$ EXHAUST

START

ST51 — TVj RECEIVED? — NO

YES

ST52 — ACQUIRE AFj

ST53

AFj<TVj — COMPARE MAGNITUDES OF AFj AND TVj — AFj>TVj

AFj=TVj

ST54 INCREASE SPEED OF OWN FAN

ST55 MAINTAIN SPEED OF OWN FAN

ST56 DECREASE SPEED OF OWN FAN

END

**EP 4 450 882 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102249491 B1
- JP 3020573 A